# EUROPEAN PATENT APPLICATION

(11) **EP 3 421 003 A1**
(43) Date of publication of application: **02.01.2019**
(21) Application number: 18181298.3
(22) Date of filing: 02.07.2018
(51) Int. Cl.: A61C 7/36, A61C 8/00

(54) **ANCHORING TEMPLATE FOR ORTHOGNATIC SURGERY AND MANUFACTURING METHOD THEREOF**

(30) Priority: 30.06.2017 PT 2017110176; 27.06.2018 PT 2018110808
(71) Applicant: Searchingessence - Lda, 4584-061 Baltar (PT)
(72) Inventor: LEAL MOREIRA COELHO, Pedro Rui, 4410-483 ARCOZELO VNG (PT); LEAL MOREIRA COELHO, Carlos Manuel, 585-061 BALTAR (PT); BRILHANTE TOMÁS, Filipe Miguel, 3030-378 COIMBRA (PT)
(74) Representative: Patentree

(57) **Abstract**

Surgical anchoring template (3) for subject-specific repositioning of the maxilla and mandible in orthognathic surgery, comprising a first plurality of attachments (3a) for attaching to implant pins (1) fixed to the zygomatic bone or maxilla, a second plurality of attachments (3b) for attaching to brackets (2) fixed to upper teeth and to brackets (2) fixed to lower teeth, a structural support (3c) wherein said attachments are fixed. The surgical anchoring template (3) is subject-specific configured such that when the first plurality of attachments (3a) is attached to implant pins (1) fixed to the zygomatic bone or maxilla of said subject, the second plurality of attachments (3b) is attached to brackets (2) fixed to upper teeth of said subject and to brackets (2) fixed to lower teeth of said subject, the mandibula and maxilla are anatomically aligned. Also a method for manufacturing of a subject-specific surgical anchoring template, comprises configuring and placing a 3D computer model of the surgical anchoring template attached to said implant pins and brackets; manufacturing said subject-specific surgical anchoring template from said 3D computer model of the surgical anchoring template.

## Description

### Technical field

The present disclosure relates to a surgical anchoring template, and to a related computer-aided design and manufacturing (CAD/CAM) method for a configured surgical anchoring template which is a patient-specific surgical template for precision repositioning of the maxilla and mandible in orthognathic surgery.

### Background

Maxillary discrepancy affects more than 3 % of population and the use of dental braces is not sufficient to correct this deformity being orthognathic surgery the only technique used to re-establish normal function.

Orthognathic surgery of the mandible was first described by Blair in 1906 and Wassmund (1927) first described the Le Fort I osteotomy for correction of the maxilla. The surgical technique currently used has been established in 1970 by Herbert, Kent and Hints for the mandible and in 1965 by Obwegeser for the maxilla.

The process consists on a diagnosis based on cephalometric measures that are compared with established standard measurements for the position of the maxilla. After deciding whether the movement of both maxillary or only one is correct, previous methods in orthodontic treatment need to be done to achieve good dental occlusion, and occlusion guides are made for transfer the maxillary position of the model set up to the position intra surgery.

Recent software solutions that use computed tomography (CT) scans for 3D reconstructions have been used for dental surgical planning and guide development. Although these methods provide good accuracy in estimating the best position for the maxillae, they always are guided by teeth splints, which have only the reference of the mobile part, and not referred to cranium or mandible ramus.

In 2013 Zinser proposed a computer-aided designed surgical splints for surgical transfer of virtual maxillary position, but the points of fixation to the ramus or cranium where not stable points.

These facts are disclosed in order to illustrate the technical problem addressed by the present disclosure.

### General Description

The present disclosure comprises a surgical anchoring template, and to a related computer-aided design and manufacturing (CAD/CAM) method for a configured surgical anchoring template which is a patient-specific surgical template for precision repositioning of the maxilla and mandible in orthognathic surgery.

It is disclosed a CAD/CAM surgical anchoring template, to be positioned at implant pins and brackets, wherein the template configuration will result from virtual repositioning of the maxilla and mandible.

This disclosure is advantageous because implant points are fixed to cranium, ramus and teeth, previous to the ct scan, that allows, at the end of the computer aided planning to create metal splints made by laser sintering that link the position of the mobile maxillaries to the fixed part of cranium and mandibular ramus, reducing time of surgery, because the fixation of both maxillaries is done at the same time, and with greater accuracy than previous approaches.

In an embodiment, the template configuration will result from six endosseous implant pins having been placed on and fixed to the cranium, in particular the zygoma and mandible ramus without surgical incision, prior to a CT scan.

In an embodiment, the template configuration will result from two implant pins implanted to the right side of the zygoma arch and two implant pins to the left side of the zygoma arch, and two implant pins respectively implanted to each side of the external oblique line of the mandibular ramus.

In an embodiment, the template configuration will result from eight dental brackets having been bound with the second premolars and canines.

In an embodiment, a surgical anchoring template should be linked to the implant pins and brackets during a computer-aided design and manufacturing (CAD/CAM) step. The implant pins and brackets are, therefore, used as reference frames to estimate the subject-specific adjustments needed to create a subject-specific surgical anchoring template.

This approach will reduce the surgery time, since the fixation of both maxillae can be done at the same time, and results in higher accuracy of CAD/CAM generated templates and is less invasive compared to the conventional methods in orthognathic surgery.

It is disclosed a surgical anchoring template for subject-specific repositioning of the maxilla and mandible in orthognathic surgery, comprising a first plurality of attachments for attaching to implant pins fixed to the zygomatic bone or maxilla, a second plurality of attachments for attaching to brackets fixed to upper teeth and to brackets fixed to lower teeth, a structural support wherein said attachments are fixed.

In an embodiment, the surgical anchoring template is subject-specific configured such that when the first plurality of attachments is attached to implant pins fixed to the zygomatic bone or maxilla of said subject, the second plurality of attachments is attached to brackets fixed to upper teeth of said subject and to brackets fixed to lower teeth of said subject, the mandibula and maxilla are anatomically aligned.

In an embodiment, said first and second plurality of attachments are a plurality of hollow pieces attachable to either pins or brackets wherein said pieces comprise a hollow for receiving said pins or bracket couplings.

In an embodiment, said structural support comprises a plurality of connectors, each said connector connecting two of said attachments, such that all said attachments are solidly fixed to each other.

In an embodiment, said hollow pieces and connectors are made of laser-sintered cobalt-chromium alloys.

In an embodiment, said connectors are eight connectors.

In an embodiment, said hollow pieces are seven hollow pieces to be connected to three implant pins and four brackets respectively.

In an embodiment, the implant pins comprise two implant pins which have been implanted in the zygoma arch of the maxilla and one implant pin which has been implanted in an end of the external oblique line of the mandibular ramus.

In an embodiment, the brackets comprise four brackets which have been bound directly to the enamel of the subject canine and premolar teeth.

In an embodiment, the teeth are the upper cuspid, upper second bicuspid, lower cuspid, lower second bicuspid of one side of the subject face.

An embodiment for a manufacturing method of a subject-specific surgical anchoring template, said method comprising: scanning the subject's skull by computerized tomography, said patient having implant pins fixed to the zygomatic bone or maxilla, and to brackets fixed to upper teeth and to brackets fixed to lower teeth; reconstructing a 3D computer model of the skull, including patient's dentition, said implant pins and brackets being obtained from computerized tomography; repositioning at least one of the upper jaw and the lower jaw relative to the subject's cranium in the 3D computer model to form anatomically aligned position of the jaws; configuring and placing a 3D computer model of the surgical anchoring template attached to said implant pins and brackets; manufacturing said subject-specific surgical anchoring template from said 3D computer model of the surgical anchoring template.

It is disclosed a surgical anchoring template for subject-specific repositioning of the maxilla and mandible in orthognathic surgery, comprising a first plurality of attachments for attaching to implant pins fixed to the zygomatic bone or maxilla, a second plurality of attachments for attaching to brackets fixed to upper teeth and to brackets fixed to lower teeth, of a specific subject, and a structural support wherein said attachments are fixed.

In an embodiment, the surgical anchoring template is subject-specific configured such that when the first plurality of attachments is attached to implant pins fixed to the zygomatic bone or maxilla of said subject, the second plurality of attachments is attached to brackets fixed to upper teeth of said subject and to brackets fixed to lower teeth of said subject, the mandibula and maxilla are anatomically aligned.

In an embodiment, said first and second plurality of attachments are a plurality of hollow pieces attachable to either pins or brackets wherein said pieces comprise a hollow for receiving couplings of said pins or brackets.

In an embodiment, said structural support comprises a plurality of connectors, each said connector connecting two of said attachments, such that all said attachments are solidly fixed to each other.

In an embodiment, said hollow pieces and connectors are made of laser-sintered cobalt-chromium alloys.

In an embodiment, said connectors are seven, eight or nine connectors.

In an embodiment, said hollow pieces are seven hollow pieces to be connected to three implant pins and four brackets respectively.

In an embodiment, the implant pins comprise one implant pin which has been implanted in the zygoma arch of the maxilla, in particular an implant pin which has been implanted between the pyramidal apophysis and infraorbital foramen.

In an embodiment, the implant pins comprise one implant pint which has been implanted between the two infraorbital foramen, in the side of the zygoma process.

In an embodiment, the implant pins comprise one implant pin which has been implanted in an end of the external oblique line of the mandibular ramus.

In an embodiment, the brackets comprise four brackets which have been bound directly to the enamel of the subject canine and premolar teeth, in particular to the canine and 2nd premolar teeth.

In an embodiment, the teeth are the upper cuspid, upper second bicuspid, lower cuspid, lower second bicuspid of one side of the subject face.

It is disclosed a computer-aided method for manufacturing of a subject-specific surgical anchoring template for repositioning of the maxilla and mandible in orthognathic surgery, said method comprising:
scanning the subject's skull by computerized tomography, said subject having implant pins previously fixed to the zygomatic bone or maxilla, brackets previously fixed to upper teeth, and brackets previously fixed to lower teeth;
reconstructing a 3D computer model of the skull from said computerized tomography scan, including subject's dentition, in which the location of said implant pins and brackets is obtained from the computerized tomography scan;
repositioning at least one of the upper jaw and the lower jaw, relative to the subject's cranium and mandibular ramus in the 3D computer model to form an anatomically aligned position of the jaws;
configuring and placing a 3D computer model of the surgical anchoring template attached to said 3D computer model implant pins and brackets;
manufacturing said subject-specific surgical anchoring template from said 3D computer model of the surgical anchoring template.

In an embodiment, the subject-specific surgical anchoring template is manufactured by laser sintering.

In an embodiment, said first and second plurality of attachments are a plurality of hollow pieces attachable to either pins or brackets wherein said pieces comprise a hollow for receiving couplings of said pins or brackets.

In an embodiment, wherein said structural support comprises a plurality of connectors, each said connector connecting two of said attachments, such that all said attachments are solidly fixed to each other.

In an embodiment, wherein said hollow pieces and connectors are made of laser-sintered cobalt-chromium alloys.

In an embodiment, wherein said connectors are seven, eight or nine connectors.

In an embodiment, wherein said hollow pieces are seven hollow pieces to be connected to three implant pins and four brackets respectively.

In an embodiment, wherein the implant pins comprise one implant pin which has been implanted in the zygoma arch of the maxilla, in particular an implant pin which has been implanted between the pyramidal apophysis and infraorbital foramen.

In an embodiment, wherein the implant pins comprise one implant pint which has been implanted between the two infraorbital foramen, in the side of the zygoma process.

In an embodiment, wherein the implant pins comprise one implant pin which has been implanted in an end of the external oblique line of the mandibular ramus.

In an embodiment, wherein the brackets comprise four brackets which have been bound to the enamel of the subject canine and premolar teeth, in particular to the canine and 2nd premolar teeth.

It is also disclosed a computer readable non-transitory medium comprising instructions executable by a computer to perform any of the disclosed methods.

It is also disclosed a computer readable non-transitory medium comprising instructions executable by a computer to perform a method for constructing a 3D computer model of a subject-specific surgical anchoring template for repositioning of the maxilla and mandible in orthognathic surgery, wherein said method comprises the steps of:
receiving a scan of the subject's skull by computerized tomography, said subject having implant pins fixed to the zygomatic bone or maxilla, and to brackets fixed to upper teeth and to brackets fixed to lower teeth;
reconstructing a 3D computer model of the skull from said computerized tomography scan, including subject's dentition, in which the location of said implant pins and brackets being obtained from the computerized tomography scan;
repositioning at least one of the upper jaw and the lower jaw relative to the subject's cranium and mandibular ramus in the 3D computer model to form anatomically aligned position of the jaws;
configuring and placing a 3D computer model of the surgical anchoring template attached to said 3D computer model implant pins and brackets;
outputting said 3D computer model of the surgical anchoring template.

### Brief Description of the Drawings

The following figures provide preferred embodiments for illustrating the description and should not be seen as limiting the scope of invention.

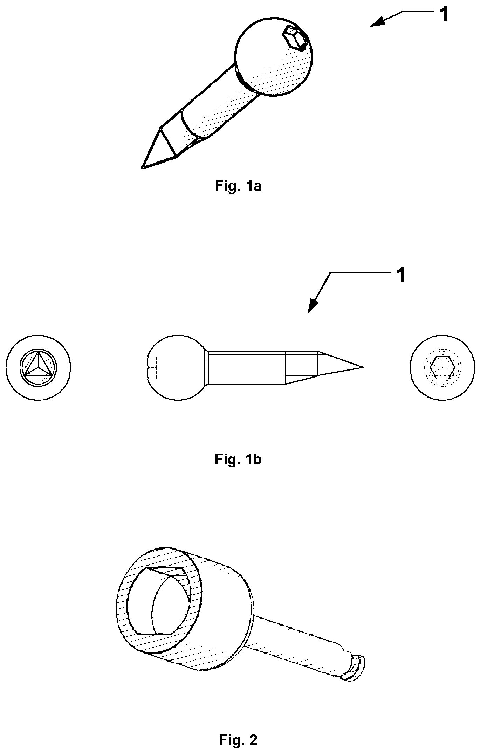

**Figure 1a****:** Perspective view of a schematic representation of an embodiment of an implant pin.
**Figure 1b****:** Top, side and bottom views of a schematic representation of an embodiment of an implant pin.
**Figure 2****:** Perspective view of a schematic representation of an implant pin tool.

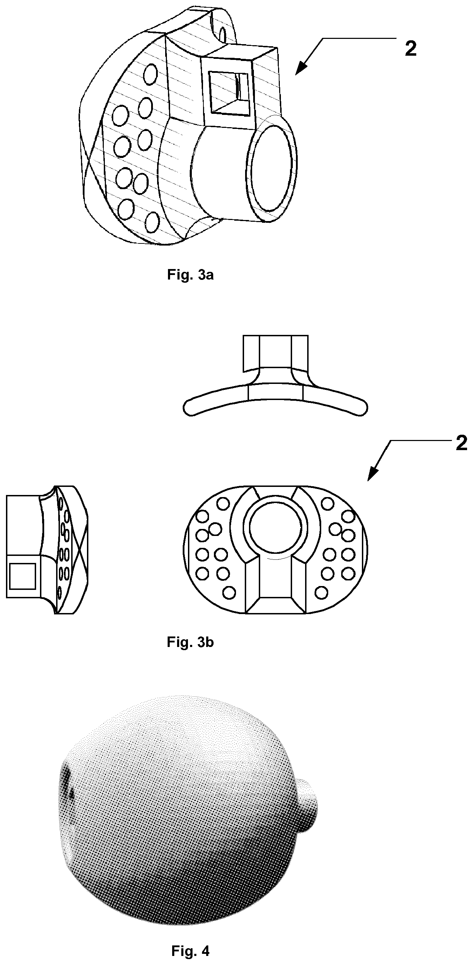

**Figure 3a****:** Perspective view of a schematic representation of an embodiment of a bracket.
**Figure 3b****:** Top, side and front views of a schematic representation of an embodiment of a bracket.
**Figure 4****:** Perspective view of a schematic representation of a bracket ball.

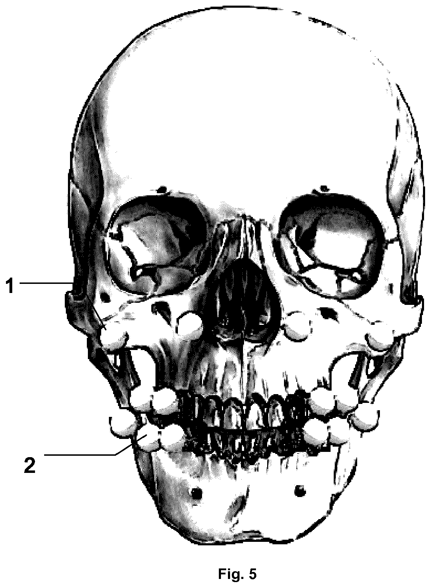

**Figure 5****:** Frontal view of a computerized three-dimensional skull model including implant pins and brackets.
**Figure 6****:** Frontal view of a computerized three-dimensional skull model including implant pins, brackets and the fixed surgical anchoring template.

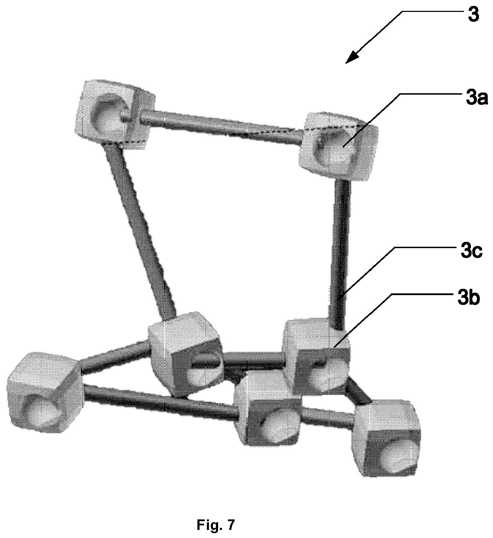

**Figure 7****:** Lateral view of a schematic representation of an embodiment of the surgical anchoring template.

### Detailed Description

The present disclosure relates to surgical anchoring template, and to a related computer-aided design and manufacturing (CAD/CAM) method for a configured surgical anchoring template which is a patient-specific surgical template for highly precise repositioning of the maxilla and mandible in orthognathic surgery comprising implant pins (1), brackets (2) and the surgical anchoring template (3).

The repositioning of the maxilla and mandible in orthognathic surgery should properly align both the upper (maxilla) and lower jaw (mandible) relative to the patient's skull.

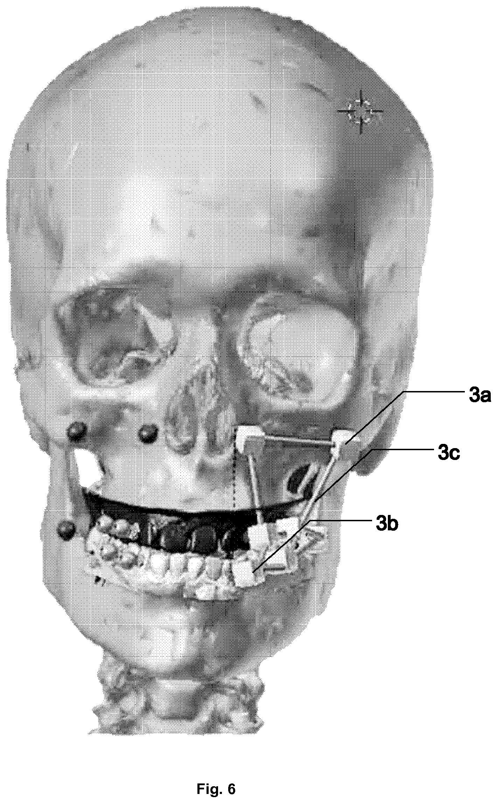

According to an embodiment, the implant pins (1) comprise a total of six endosseous implant pins. According to an embodiment, two implant pins should be implanted in the zygoma arch, specifically between the pyramidal apophysis and infraorbital foramen, respectively, in the right and left side of the zygoma arch. According to an embodiment, two implant pins should be implanted specifically between the two infraorbital foramen, respectively, in the right and left side of the zygoma process. According to an embodiment, the other two implant pins should be respectively implanted to each end of the external oblique line of the mandibular ramus (Fig. 6).

According to an embodiment, eight brackets (2) should be bond directly to the enamel of the canine and 2nd premolar tooth using bonding cement, respectively, to the upper right cuspid (upper right canine), upper right second bicuspid (upper right second premolar), upper left cuspid (upper left canine), upper left second bicuspid (upper left second premolar), lower left cuspid (lower left canine), lower left second bicuspid (lower left second premolar), lower right second bicuspid (lower right second premolar), and lower right cuspid (lower right canine).

After pin (1) implantation and brackets (2) placement, patients should undergo a scan of their skull, for example a CT scan. At this stage, the patient's skulls have the implant pins (1) and brackets (2) already implanted.

Tailoredimplant(tm) software can be used, for example, to reconstruct the three-dimensional (3D) skull model from DICOM images obtained by CT, including STL files of tooth and patient's face photo.

On the implant design software, e.g. Tailoredimplant(tm), the procedures are the following:
a) Dicom segmentation generating 2 volumes: bone and skin;
b) Stitch facial photo to skin volume;
c) Stitch teeth STL files to bone volume;
d) Design the cut plans of maxillaries;
e) Separate maxillaries and positioning where it suits, taking in consideration the influence on the image of that face and cephalometric data;
f) Design surgical anchoring template(s);
g) Substitute the implant and brackets by the STL files existing on software library;
h) Create the guides of maxillaries positioning.

Surgical anchoring template might be obtained by laser sintering. Manufacturing can be done by BoneEasy. The surgical anchoring templates (3) are sterilized and shipped to the requesting doctor.

At the end of the maxillary positioning surgical procedure, implants (1) and the balls from the brackets (2) are removed.

It is disclosed a surgical anchoring template (3) for subject-specific repositioning of the maxilla and mandible in orthognathic surgery, comprising a first plurality of attachments (3a) for attaching to implant pins (1) fixed to the zygomatic bone or maxilla, a second plurality of attachments (3b) for attaching to brackets (2) fixed to upper teeth and to brackets (2) fixed to lower teeth, a structural support (3c) wherein said attachments are fixed.

In an embodiment, the surgical anchoring template (3) is subject-specific configured such that when the first plurality of attachments (3a) is attached to implant pins (1) fixed to the zygomatic bone or maxilla of said subject, the second plurality of attachments (3b) is attached to brackets (2) fixed to upper teeth of said subject and to brackets (2) fixed to lower teeth of said subject, the mandibula and maxilla are anatomically aligned.

In an embodiment, said first (3a) and second plurality (3b) of attachments are a plurality of hollow pieces attachable to either pins (1) or brackets (2) wherein said pieces comprise a hollow for receiving said pins (1) or bracket (2) couplings.

In an embodiment, said structural support (3c) comprises a plurality of connectors, each said connector connecting two of said attachments (3a and 3b), such that all said attachments are solidly fixed to each other.

In an embodiment, said hollow pieces (3a and 3b) and connectors (3c) are made of laser-sintered cobalt-chromium alloys.

In an embodiment, said connectors (3c) are eight connectors.

In an embodiment, said hollow pieces are seven hollow pieces (3a and 3b) to be connected to three implant pins (1) and four brackets (2) respectively.

In an embodiment, the implant pins (1) comprise two implant pins which have been implanted in the zygoma arch of the maxilla and one implant pin which has been implanted in an end of the external oblique line of the mandibular ramus.

In an embodiment, the brackets comprise four brackets (2) which have been bound directly to the enamel of the subject canine and premolar teeth.

In an embodiment, the teeth are the upper cuspid, upper second bicuspid, lower cuspid, lower second bicuspid of one side of the subject face.

An embodiment for manufacturing of a subject-specific surgical anchoring template (3), said method comprising: scanning the subject's skull by computerized tomography, said patient having implant pins (1) fixed to the zygomatic bone or maxilla, and to brackets (2) fixed to upper teeth and to brackets (2) fixed to lower teeth; reconstructing a 3D computer model of the skull, including patient's dentition, said implant pins (1) and brackets (2) being obtained from computerized tomography; repositioning at least one of the upper jaw and the lower jaw relative to the subject's cranium in the 3D computer model to form anatomically aligned position of the jaws; configuring and placing a 3D computer model of the surgical anchoring template (3) attached to said implant pins (1) and brackets (2); manufacturing said subject-specific surgical anchoring template (3) from said 3D computer model of the surgical anchoring template (3).

The disclosure should not be seen in any way restricted to the embodiments described and a person with ordinary skill in the art will foresee many possibilities to modifications thereof.

The above described embodiments are combinable. The following claims further set out particular embodiments of the disclosure.

## Claims

1. Surgical anchoring template for subject-specific repositioning of the maxilla and mandible in orthognathic surgery, comprising a first plurality of attachments for attaching to implant pins fixed to the zygomatic bone or maxilla, a second plurality of attachments for attaching to brackets fixed to upper teeth and to brackets fixed to lower teeth, of a specific subject, and a structural support wherein said attachments are fixed.

2. Surgical anchoring template according to the previous claim, wherein the surgical anchoring template is subject-specific configured such that when the first plurality of attachments is attached to implant pins fixed to the zygomatic bone or maxilla of said subject, the second plurality of attachments is attached to brackets fixed to upper teeth of said subject and to brackets fixed to lower teeth of said subject, the mandibula and maxilla of said specific subject are anatomically aligned.

3. Surgical anchoring template according to any of the previous claims, wherein said first and second plurality of attachments are a plurality of hollow pieces attachable to either pins or brackets wherein said pieces have a hollow for receiving couplings of said pins or brackets.

4. Surgical anchoring template according to any of the previous claims, wherein said structural support comprises a plurality of connectors, each said connector connecting two of said attachments, such that all said attachments are solidly fixed to each other, in particular wherein said connectors are seven, eight or nine connectors.

5. Surgical anchoring template according to claim 3 and 4, wherein said hollow pieces and connectors are made of laser-sintered cobalt-chromium alloys.

6. Surgical anchoring template according to claim 3, wherein said hollow pieces are seven hollow pieces to be connected to three implant pins and four brackets respectively.

7. Surgical anchoring template according to any of the previous claims, wherein the implant pins comprise one implant pin which has been implanted in the zygoma arch of the maxilla, in particular an implant pin which has been implanted between the pyramidal apophysis and infraorbital foramen.

8. Surgical anchoring template according to any of the previous claims, wherein the implant pins comprise one implant pint which has been implanted between the two infraorbital foramen, in the side of the zygoma process.

9. Surgical anchoring template according to any of the previous claims, wherein the implant pins comprise one implant pin which has been implanted in an end of the external oblique line of the mandibular ramus.

10. Surgical anchoring template according to any of the previous claims, wherein the brackets comprise four brackets which have been bound directly to the enamel of the subject canine and premolar teeth, in particular to the canine and 2^{nd} premolar teeth.

11. Surgical anchoring template according to any of the previous claims, wherein the teeth are the upper cuspid, upper second bicuspid, lower cuspid, lower second bicuspid of one side of the subject face.

12. Surgical anchoring template kit comprising a left hand side surgical anchoring template according to any of the previous claims and a right hand side surgical anchoring template according to any of the previous claims.

13. A computer-aided method for manufacturing of a subject-specific surgical anchoring template for repositioning of the maxilla and mandible in orthognathic surgery, said method comprising:
scanning the subject's skull by computerized tomography, said subject having implant pins previously fixed to the zygomatic bone or maxilla, brackets previously fixed to upper teeth, and brackets previously fixed to lower teeth;
reconstructing a 3D computer model of the skull from said computerized tomography scan, including subject's dentition, in which the location of said implant pins and brackets is obtained from the computerized tomography scan;
repositioning at least one of the upper jaw and the lower jaw, relative to the subject's cranium and relative to the mandibular ramus in the 3D computer model to form an anatomically aligned position of the jaws;
configuring and placing a 3D computer model of the surgical anchoring template attached to said 3D computer model implant pins and brackets;
manufacturing said subject-specific surgical anchoring template from said 3D computer model of the surgical anchoring template.

14. Method according to claim 13, wherein said first and second plurality of attachments are a plurality of hollow pieces attachable to either pins or brackets wherein said pieces comprise a hollow for receiving couplings of said pins or brackets; and
wherein said structural support comprises a plurality of connectors, each said connector connecting two of said attachments, such that all said attachments are solidly fixed to each other.

15. A computer readable non-transitory medium comprising instructions executable by a computer to perform the method of any of the claims 13-14.
